# EUROPEAN PATENT SPECIFICATION

(11) **EP 4 270 537 B1**
(45) Date of publication and mention of the grant of the patent: **02.12.2026**
(21) Application number: 22887680.1
(22) Date of filing: 28.10.2022
(51) Int. Cl.: H01M 4/04, H01M 4/58, H01M 4/1397, H01M 4/136, H01M 4/36, H01M 4/62, H01M 10/0525, H01M 4/02

(54) **METHOD FOR MANUFACTURING CATHODE FOR LITHIUM SECONDARY BATTERY, CATHODE MANUFACTURED USING SAME, AND LITHIUM SECONDARY BATTERY COMPRISING SAME**
VERFAHREN ZUR HERSTELLUNG EINER KATHODE FÜR EINE LITHIUMSEKUNDÄRBATTERIE, DAMIT HERGESTELLTE KATHODE UND LITHIUMSEKUNDÄRBATTERIE DAMIT
PROCÉDÉ DE FABRICATION DE CATHODE POUR BATTERIE SECONDAIRE AU LITHIUM, CATHODE FABRIQUÉE À L'AIDE DE CELUI-CI, ET BATTERIE SECONDAIRE AU LITHIUM LE COMPRENANT

(30) Priority: 29.10.2021 KR 20210146518; 21.10.2022 KR 20220136064
(43) Date of publication of application: 01.11.2023
(73) Proprietor: LG Energy Solution, Ltd., Seoul 07335 (KR)
(72) Inventor: KWON, O Jong, Daejeon 34122 (KR); KIM, Ki Woong, Daejeon 34122 (KR); AN, In Gu, Daejeon 34122 (KR); KIM, Min Hyun, Daejeon 34122 (KR); JOE, Youn Cheol, Daejeon 34122 (KR); JO, Jeong Geun, Daejeon 34122 (KR)
(74) Representative: Plasseraud IP
(86) International application number: PCT/KR2022/016645
(87) International publication number: WO 2023/075485

(56) References cited:
- JP-A- 2010 528 410
- JP-A- 2011 103 305
- JP-A- 2017 027 679
- KR-A- 19980 026 047
- KR-A- 20130 118 247
- US-A1- 2010 304 270
- US-A1- 2020 144 600
- "A Basic Guide to Particle Characterization", MALVERN INSTRUMENTS WORLDWIDE - WHITE PAPER, 2 May 2012 (2012-05-02), pages 1 - 26, XP055089322, Retrieved from the Internet <URL:http://golik.co.il/Data/ABasicGuidtoParticleCharacterization(2)_1962085150.pdf> [retrieved on 20180515]
- LÉONARD ALEXANDRE F., JOB NATHALIE: "Safe and green Li-ion batteries based on LiFePO4 and Li4Ti5O12 sprayed as aqueous slurries with xanthan gum as common binder", MATERIALS TODAY ENERGY, vol. 12, 1 June 2019 (2019-06-01), pages 168 - 178, XP093062263, ISSN: 2468-6069, DOI: 10.1016/j.mtener.2019.01.008

## Description

### [Technical Field]

This application claims the benefit of a priority based on Korean Patent Application No. 10-2021-0146518, filed on October 29, 2021, and Korean Patent Application No. 10-2022-0136064, filed on October 21, 2022.

The present invention relates to a manufacturing method of a positive electrode for a lithium secondary battery comprising a lithium iron phosphate positive electrode active material, a positive electrode for a lithium secondary battery manufactured using the same, and a lithium secondary battery comprising the positive electrode.

### [Background Art]

As technology development and demand for mobile devices increase, the demand for lithium secondary batteries as an energy source is rapidly increasing. A lithium transition metal composite oxide is used as a positive electrode active material of a lithium secondary battery, and among them, a lithium cobalt complex metal oxide having high action voltage and excellent capacity characteristics is commonly used. However, since a lithium cobalt complex metal oxide is low stability and high cost, it is difficult to mass-produce lithium secondary batteries.

Accordingly, as materials to substitute the lithium cobalt complex metal oxide, lithium manganese complex metal oxide, lithium nickel complex metal oxide, lithium iron phosphate, and the like were developed. Among them, a lithium iron phosphate having an olivine structure has a high volume density, generates a high electric potential, and has a high theoretical capacity of approximately 170mAh/g. In addition, since a lithium iron phosphate in the initial state includes one electrochemically undopable Li for each Fe atom, it is a promising material as a positive electrode active material for lithium secondary batteries. Furthermore, since lithium iron phosphate contains iron, which is a resource-rich and a low cost material, it is lower cost and less toxic than the above-mentioned lithium cobalt complex oxide, the lithium manganese complex metal oxide, or the lithium nickel complex metal oxide, thereby having an advantage of less pollution to the environment.

However, since lithium iron phosphate has a limitation in that its lithium intercalation/de-intercalation rate is low during charging/discharging, it is manufactured in a smaller particle size than positive electrode active materials having other compositions. When the particle size of the positive electrode active material is small, there is a problem of decrease in the adhesive strength with the current collector, and de-intercalation of a positive electrode active material layer may occur due to the mechanical shock applied to an electrode during the assembly process of a secondary battery. When the de-intercalation of the positive electrode active material layer occurs, the actual measured capacity of a secondary battery compared to the design capacity decreases, and there is a problem in that a fine short circuit defect may occur due to the de-intercalated particles. Conventionally, to solve the above-described problem, increasing the total binder content in the positive electrode active material layer, or adjusting the binder content to be high at the interface between the current collector and the active material layer by mitigating binder migration by increasing the drying time during electrode coating have been known as the technologies for improving the electrode adhesion strength. US2020/144600A, JP2017027679A, US2010304270A and Léonard Alexandre F., Job Nathalie, Materials Today Energy, vol. 12, 1 June 2019, pages 168-178 all disclose methods for manufacturing positive electrodes.

However, when the binder content in an active material layer increases, there is a disadvantage in that the resistance characteristics and energy density per volume of an electrode decrease. In addition, when the drying time is increased, there is a limitation in that the production cost of an electrode and a secondary battery increases.

### [Technical Problem]

The present invention is directed to provide a manufacturing method of a positive electrode for a lithium secondary battery capable of increasing the content of a binder included in a positive electrode active material layer when manufacturing a positive electrode including a lithium iron phosphate positive electrode active material having a small particle size, and increasing the adhesion strength of an electrode without increasing the drying time of the electrode.

In addition, it is directed to provide a positive electrode manufactured by the above manufacturing method and having an excellent adhesion strength of an electrode active material layer to an electrode current collector and a lithium secondary battery comprising the positive electrode.

### [Technical Solution]

The invention is defined in the appended claims. A manufacturing method of a positive electrode for a secondary battery according to the present invention may include: a step of preparing a positive electrode in which a positive electrode active material layer including a lithium iron phosphate is formed on a current collector; and a step of absorbing an organic solvent into the positive electrode active material layer.

In one embodiment of the present invention, the organic solvent may include one or more selected from the group consisting of N-Methyl-2-pyrrolidone (NMP), dimethyl sulfoxide (DMSO), isopropyl alcohol, acetone, and ethanol.

In one embodiment of the present invention, the organic solvent may include one or more selected from the group consisting of dimethylcarbonate (DMC), diethylcarbonate (DEC), methylethylcarbonate (MEC), ethylmethylcarbonate (EMC), ethylene carbonate (EC) and propylene carbonate (PC).

In one embodiment of the present invention, the lithium iron phosphate may be the compound represented by Formula 1 below.

[Formula 1] Li₁₊ₐFe₁₋ₓMₓ(PO_{4-b})X_{b}

Wherein, in the formula,
M includes one or two or more elements selected from a group consisting of Al, Mg, Ni, Co, Mn, Ti, Ga, Cu, V, Nb, Zr, Ce, In, Zn, and Y,
X includes one or two or more elements selected from a group consisting of F, S, and N,
a, b, and x are -0.5≤a≤0.5, 0≤b≤0.1, 0≤x≤0.5 respectively.

In one embodiment of the present invention, the lithium iron phosphate may be LiFePO₄ having an olivine crystal structure.

In one embodiment of the present invention, the average particle diameter D₅₀ of the lithium iron phosphate may be 0.5 to 3 *µ*m.

In one embodiment of the present invention, the positive electrode active material layer may further include a binder.

In one embodiment of the present invention, the binder may be one or more selected from a group consisting of polyvinylidene fluoride (PVDF), styrene butadiene rubber (SBR), and carboxy methyl cellulose (CMC).

In one embodiment of the present invention, the binder content with respect to the total weight of the positive electrode active material layer may be 5wt% or less.

In one embodiment of the present invention, a step of absorbing an organic solvent to the positive electrode active layer may include a process of directly spraying the organic solvent onto the positive electrode or sealing the positive electrode with the organic solvent in an airtight container to absorb the organic solvent.

In one embodiment of the present invention, the organic solvent may be absorbed in a ratio of 2,000 to 20,000 ppm with respect to the total weight of the positive electrode active material layer.
the positive electrode according to one embodiment of the present invention may include a positive electrode current collector and a positive electrode active material layer which is formed on at least one side of the positive electrode current collector and comprises a lithium iron phosphate, and the positive electrode active material layer may include an organic solvent at a ratio of 2,000 to 20,000 ppm with respect to the total weight of the positive electrode active material layer.

In one embodiment of the present invention, the electrode adhesion strength measured by a 90°peel test between the positive electrode active material layer and the positive electrode current collector may be 4.9 N/m (10 gf/2 cm) or more.

In one embodiment of the present invention, the positive electrode active material layer may be in direct contact with the positive electrode current collector.

In one embodiment of the present invention, the average particle diameter (D₅₀) of the lithium iron phosphate may be 0.5 to 3 *µ*m.

The lithium secondary battery according to the present invention includes the positive electrode.

### [Advantageous Effects]

In the case of the positive electrode manufactured according to the present invention is used, since the adhesion strength between the electrode active material layer and the electrode current collector is high, there is an effect of preventing occurrences of defects such as capacity reduction and fine short circuit due to de-intercalation of the active material occurring during the secondary battery assembly process.

Specifically, in the present invention, by interposing organic solvent molecules at the contact interface between the current collector and the active material layer using an organic solvent that is well absorbed to an active material, a binder, and a current collector, the adhesion strength is increased by a formation of an attractive force between atoms/molecules.

In addition, as the positive electrode according to the present invention exhibits sufficient electrode adhesion strength without increasing the binder content, the resistance characteristics of the secondary battery and flexibility of the electrode are improved. Furthermore, as sufficient electrode adhesion strength is exhibited without increasing the drying time when manufacturing the positive electrode, the manufacturing cost and the manufacturing time of a secondary battery can be reduced.

### [Best form for implementation of the invention]

The terms and the words used in the present specification and claims should not be interpreted as being limited to conventional or dictionary meanings, and should be interpreted with meanings and concepts which are consistent with the technological scope of the invention based on the principle that the inventors have appropriately defined concepts of the terms in order to describe the invention in the best way.

The terms "comprise," "include" and "have" used herein to designate the presence of characteristics, numbers, steps, components or members described in the specification or a combination thereof, and it should be understood that the possibility of the presence or addition of one or more other characteristics, numbers, steps, components, members or a combination thereof is not excluded in advance.

In the present invention, 'the particle diameter Dₙ' of the positive electrode active material indicates the particle diameter at the n% point of the volume cumulative distribution according to the particle diameter. That is, D₅₀ is the particle diameter at the 50% point in the volume cumulative distribution according to the particle diameter. D₉₀ is the particle diameter at the 90% point in the volume cumulative distribution according to the particle diameter. D₁₀ is the particle diameter at the 10% point in the volume cumulative distribution according to the particle diameter. The Dₙ can be measured using a laser diffraction method. Specifically, the particle-size distribution is calculated by dispersing powder to be measured in a dispersion medium, introducing it to a commercially available laser diffraction particle size measuring equipment (e.g., Microtrac S3500), and measuring the difference in diffraction pattern according to the particle size when the particles pass through the laser beam. D₁₀, D₅₀, and D₉₀ can be measured by calculating the particle diameter at the 10%, 50%, and 90% points of the volume cumulative distribution according to the particle diameter in the measuring equipment.

Hereinafter, the present invention will be described in detail.

The manufacturing method of a positive electrode for a lithium secondary battery according to the present invention may comprise: a step of preparing a positive electrode in which a positive electrode active material layer including a lithium iron phosphate is formed on a current collector; and a step of absorbing an organic solvent into the positive electrode active material layer.

Specifically, according to the manufacturing method of a positive electrode for a lithium secondary battery in the present invention, a positive electrode in which a positive electrode active material layer is formed on a current collector can be prepared by applying a composition for forming a positive electrode active material layer containing a lithium iron phosphate-based positive electrode active material on at least one side of a positive electrode current collector, and drying it.

The composition for forming the positive electrode active material layer can be prepared by mixing or dispersing the positive electrode active material into a solvent.

Specifically, the positive electrode active material may include a lithium iron phosphate having a composition represented by the following Formula 1. To be more specific, it may include LiFePO₄ having an olivine crystal structure. When a lithium iron phosphate is used as a positive electrode active material, there are advantages in that the positive electrode has a high volume density, can generate a high electric potential, and has a large capacity.

[Formula 1] Li₁₊ₐFe₁₋ₓMₓ(PO_{4-b})X_{b}

Wherein, in the formula,
M includes one or two or more elements selected from the group consisting of Al, Mg, Ni, Co, Mn, Ti, Ga, Cu, V, Nb, Zr, Ce, In, Zn and Y,
X includes one or two or more elements selected from the group consisting of F, S, and N,
a, b, and x are -0.5≤a≤0.5, 0≤b≤0.1, 0≤x≤0.5 respectively.

The inventors of the present invention, as a result of repeated efforts to improve the adhesion strength of the positive electrode including the positive electrode active material, found that the adhesion strength of the positive electrode dramatically increased by adding a step of absorbing an organic solvent to the positive electrode active material layer, which has led to the present invention.

As the organic solvents, the type of organic solvents is not limited as long as it is an organic solvent capable of forming an attractive force with the binder, the positive electrode active material, and the current collector included in the positive electrode active material layer. Specifically, such organic solvents which are used in a slurry for a positive electrode or an electrolyte solution of a lithium secondary battery are preferred.

Specific examples of the organic solvent used in the slurry for a positive electrode may include one or more selected from the group consisting of N-Methyl-2-pyrrolidone (NMP), dimethyl sulfoxide (DMSO), isopropyl alcohol, acetone, and ethanol.

The organic solvent used in the electrolyte of the lithium secondary battery is a nonaqueous organic solvent that serves as a medium for the movement of ions related to an electrochemical reaction of the battery, and specific examples of the organic solvents include ester solvents such as methyl acetate, ethyl acetate, γ-butyrolactone, ε-caprolactone; ether solvents such as dibutyl ether or tetrahydrofuran; ketone solvents such as cyclohexanone; aromatic hydrocarbonated based solvents such as benzene and flurobenzene; carbonate based solvents such as dimethylcarbonate (DMC), diethylcarbonate (DEC), methylethylcarbonate (MEC), ethylmethylcarbonate (EMC), ethylene carbonate (EC) and propylene carbonate (PC); alcohol solvents such as ethyl alcohol and isopropyl alcohol; nitriles such as R-CN (R is a linear, a branched or a cyclic hydrocarbon group having 2 to 20 carbon atoms, and may include an aromatic ring with a double bond or an ether linkage); amides such as dimethylformamide; dioxolanes such as 1,3-dioxolane; and sulfolanes. Among the above examples, the carbonate based solvents are preferred.

In the present invention, in order to accelerate the rate of lithium intercalation/de-intercalation of a lithium iron phosphate positive electrode active material while charging/discharging, the average particle diameter (D₅₀) of the positive electrode active material can be adjusted to 0.5 to 3 µm, preferably 0.5 to 2.7 µm, and more preferably 0.6 to 2.5 *µ*m.

Furthermore, the composition for forming a positive electrode active material may further include a binder in addition to the positive electrode active material.

The binder serves to improve the adherence between the positive electrode active material particles and the adhesion strength between the positive electrode active material and the positive electrode current collector. The specific examples are polyvinylidene fluoride (PVDF), polyvinylalcohol, carboxymethylcellulose (CMC), starch, Hydroxypropyl cellulose, regeneration cellulose, polyvinylpyrrolidone, tetrafluoroethylene, polyethylene, polypropylene, Ethylene-Propylene Diene Monomer (EPDM), sulfone-EDPM, and styrene-butadiene rubber, fluororubber, or various copolymers thereof, and they may be used alone or in a mixture of two or more of them.

Among the above examples, polyvinylidene fluoride (PVDF) is more advantageous in forming an attraction force between the organic solvent and the molecules of the present invention compared to other binders, thereby polyvinylidene fluoride (PVDF) is preferable as the positive electrode binder of the present invention.

The binder may be included in an amount of 5wt% or less, preferably 1 to 5wt%, and more preferably 2 to 3.5wt% with respect to the total weight of the solid content in the composition for forming a positive electrode active material layer. When the content of the binder is less than the above range, there is a problem in that the electrode adhesion strength is too low, and when the content of the binder is more than the above range, there is a problem in that the resistance of the secondary battery is too high.

The composition for forming the positive electrode active material layer of the present invention may further include one or more additives such as a conductive additive, a filler, or a dispersant.

The conductive additive is used to improve the conductivity of an electrode, and as long as it does not cause a chemical change in the secondary battery and has an electronic conductivity, it can be used without limitation. Specific examples include, for example, carbon powders such as carbon black, acetylene black, ketjen black, channel black, furnace black, lamp black, or thermal black; graphite powders such as natural graphite, artificial graphite, or graphite; conductive fibers such as carbon fibers, carbon nanotubes, and metal fibers; conductive powders such as fluorinated carbon powder, aluminum powder, and nickel powder; conductive whiskers such as zinc oxide and potassium titanate; conductive metal oxide such as titanium oxide; conductive materials such as polyphenylene derivatives, and etc., and they may be used alone or in a mixture of two or more of them.

The conductive additive may be conventionally included in an amount of 0.3 to 5wt%, preferably 0.3 to 4wt%, and more preferably 0.5 to 3.5wt% with respect to the total weight of the solid content in the composition for forming a positive electrode active material layer.

The dispersant is for improving the dispersibility of the lithium iron phosphate-based positive electrode active material, and it is not limited as long as it is a conventionally used dispersant, and for example, an aqueous dispersant or an organic dispersant may be used. Although it is not limited, hydrogenated nitrile butadiene rubber (HNBR) may be used more preferably. The hydrogenated nitrile butadiene rubber (NHBR) indicates that a double bond originally included in the nitrile rubber (NBR) is converted into a single bond by hydrogenating nitrile butadiene rubber (NBR).

The dispersant may be included in an amount of 0 to 4wt%, preferably 0 to 2wt%, and more preferably 0.10 to 1.3wt% with respect to the total weight of the solid content in the composition for forming a positive electrode active material layer.

In the manufacturing method of the present invention, the positive electrode current collector is not particularly limited as long as it has a conductivity without causing chemical change in the battery, and for example, stainless steel, aluminum, nickel, titanium, baked carbon, or other surfaces treated with carbon, nickel, titanium, silver, and etc. may be used.

In addition, the positive electrode current collector may have a thickness of 8 to 20 *µ*m, and the adhesion strength to the positive electrode active material layer may be increased by forming fine unevenness on the surface of the positive current collector. For example, it may be used in various forms such as films, sheets, foils, nets, porous materials, foams, and non-woven fabrics.

In the manufacturing method of the present invention, the process of applying the composition for forming a positive electrode active material layer to the positive electrode current collector may be performed by a method conventionally used in the industry, but it may be performed by, for example, uniformly dispersing using a doctor blade, etc., or may be performed by methods such as die casting, comma coating, screen printing, etc.

In the manufacturing method of the present invention, the drying process of the composition for forming a positive electrode material layer applied on the positive current collector may be performed according to a conventional drying method, for example, the heat treatments such as a vacuum heating treatment in the above temperature range, or a hot air injection, etc.

Here, the temperature of the drying process may be 60 °C to 130 °C, specifically 80 °C to 130 °C, more specifically 100 °C to 130 °C. When the temperature is within the above range, the moisture content in the lithium iron phosphate can be minimized, and the volatile components included in the manufacturing process are sufficiently removed, thereby the side reactions caused by these components during charging/discharging of the battery and the battery characteristics deterioration can be prevented.

In addition, the drying process time required may be 5 minutes to 3 hours, specifically 5 minutes to 20 minutes, more specifically 5 minutes to 10 minutes. The drying process time required can be shortened to the above range according to the manufacturing method of the present invention.

Next, the manufacturing method of the present invention may include an absorption process of an organic solvent to the positive electrode active material layer. The organic solvent is a material that can be well absorbed to the active material, the binder, and the current collector, and it can increase the electrode adhesion strength by forming attraction forces between atoms/molecules by interposing the organic solvent molecules at the contact interface between the current collector and the active material layer.

In one embodiment of the present invention, the organic solvent may be an organic solvent used for a positive electrode slurry, and to be more specific, it may include one or more selected from the group consisting of N-Methyl-2-pyrrolidone (NMP), dimethyl sulfoxide (DMSO), isopropyl alcohol, acetone, and ethanol.

In another embodiment of the present invention, the organic solvent may be an organic solvent constituting the electrolyte solution of a lithium secondary battery, and more specifically, may include one or more selected from the group consisting of dimethylcarbonate (DMC), diethylcarbonate (DEC), methylethylcarbonate (MEC), ethylmethylcarbonate (EMC), ethylene carbonate (EC), and propylene carbonate (PC). The carbonate-based solvent has an excellent effect of improving the adhesion strength.

When the organic solvent, which has the same components as the electrolyte solution of the secondary battery, is selected as the organic solvent to be adsorbed to the positive electrode active material layer, there is an advantage in that the process of drying the organic solvent after the process of adsorbing the organic solvent can be omitted.

In the manufacturing method of the present invention, the organic solvent may be adsorbed in a rate of 2,000 to 20,000 ppm, preferably 2,000 to 10,000 ppm, and more preferably 2,000 to 4,000 ppm, with respect to the total weight of the positive electrode active material layer. When the adsorption amount is lower than the above range, the effect of improving adhesion strength is limited, and when the adsorption amount is high, there is a disadvantage in that the adhesion strength with the separator is lowered.

Specifically, the step of adsorbing the organic solvent to the positive electrode active material layer may be performed by directly spraying the organic solvent onto the positive electrode or by sealing the positive electrode together with the organic solvent in an airtight container and absorbing the organic solvent.

When the organic solvent is sprayed by a spray nozzle, it may be sprayed in an amount of 0.01 to 2 mg/cm², preferably 0.01 to 1 mg/cm², more preferably 0.05 to 0.5 mg/cm². An appropriate amount of organic solvent may be adsorbed into the positive electrode active material layer when it is sprayed at the above spraying amount. In addition, the positive electrode may be aged in a dry room environment at room temperature so that the organic solvent applied to the surface is entirely absorbed and impregnated into the electrode.

Alternatively, the Petri dish including the organic solvent and the positive electrode may be placed in an airtight container, sealed, and stored for several days so that the organic solvent volatilized in the airtight container is adsorbed into the positive electrode active layer.

As described above, after storing the laminate, in which the positive electrode that has the organic solvent adsorbed, the negative electrode, and the separation membrane are stacked, inside the exterior material of the battery, the organic solvent may go through a drying process before injecting the electrolyte solution in order to prevent deterioration of electrical properties due to the adsorbed organic solvent. However, when the organic solvent absorbed into the positive electrode has the same component as the electrolyte solution, the drying process may be omitted, since the organic solvent adsorbed into the positive electrode can serve as a medium for the movement of ions.

The positive electrode manufactured according to the manufacturing method of the present invention includes an organic solvent in the positive electrode active material layer as it undergoes the step of adsorbing the organic solvent. The content of the organic solvent included in the positive electrode active material layer with respect to the total weight of the positive electrode active material layer is 2,000 to 20,000 ppm.

The content of the organic solvent, with respect to the positive electrode specimen cut to a certain size, is defined as a value obtained by calculating the average value after measuring the adsorption amount of the organic solvent three times using the Headspace Gas Chromatography with flame ionization detection equipment (HS-GC-FID)
When the organic solvent is an organic solvent used in the positive electrode slurry, such as NMP, it is preferable that the content of the organic solvent is 2,000 to 12,000 ppm, 2,500 to 10,000 ppm, or 3,000 to 9,000 ppm.

When the organic solvent is an organic solvent used in an electrolyte solution, the content of the organic solvent may be 2,000 to 20,000 ppm, preferably 3,000 to 15,000 ppm, and more preferably 4,000 to 12,000 ppm.

The positive electrode according to one embodiment of the present invention has a structure in which the positive electrode active material layer directly contacts the positive electrode current collector, and it may not include a separate layer for improving the adhesion strength between the positive electrode active material layer and the positive electrode current collector.

Due to its unique manufacturing process, the positive electrode of the present invention includes the organic solvent in the positive electrode active material layer, and the organic solvent forms an attraction force between the positive electrode active material and the current collector, thereby, it has an effect of improving the adhesion strength of the contact interface between the positive electrode active material layer and the positive electrode current collector. Therefore, although there is no separate layer such as a binding layer, an adhesive layer, a coupling layer, or a primer coating layer interposed between the positive electrode current collector and the positive electrode active material layer to improve adhesive strength, the positive electrode of the present invention exhibits an excellent electrode adhesion strength, which is measured to be 4.9 N/m (10 gf/2 cm) or more, preferably 7.36 N/m (15 gf/2 cm) or more by the 90 ° peel test.

In conclusion, the positive electrode of the present invention can improve the capacity and output characteristics of the battery due to the increased adhesion strength, and reduce defects occurring in the manufacturing process.

The present invention provides a lithium secondary battery including the positive electrode described above.

The lithium secondary battery includes a positive electrode, a negative electrode, a separator interposed between the positive electrode and the negative electrode, and a nonaqueous electrolyte, and the positive electrode is as described above.

The negative electrode in the lithium secondary battery may be manufactured after manufacturing a composition for forming a negative electrode including a negative electrode active material and optional additives such as a binder, a conductor, a filler, a dispersant, etc., on a negative electrode current collector and applying it on the negative electrode current collector. Here, the negative electrode active material is not particularly limited as long as the compound is capable of reversible intercalation and de-intercalation of a conventional lithium. Specific examples include: carbonaceous materials such as artificial graphite, natural graphite, graphitized carbon fiber, amorphous carbon, and highly crystalline carbon; metallic compounds capable of being alloyed with lithium, such as Si, Al, Sn, Pb, Zn, Bi, In, Mg, Ga, Cd, Si alloys, Sn alloys, or Al alloys; or a composite including a metallic compound and a carbonaceous material. In addition, as the low crystalline carbon, soft carbon and hard carbon may be used; as the high crystalline carbon, high temperature calcined carbon such as natural graphite, kish graphite, pyrolytic carbon, mesophase pitch based carbon fiber, meso-carbon microbeads, mesophase pitches, petroleum or coal tar pitch derived cokes, etc., may be used. They may be used alone or in a mixture of two or more of them, and a metal lithium thin film may be used as the negative electrode active material.

In addition, the additives such as the binder, the conductive additive, the filler, and the dispersant may be the same as those described in the positive electrode section.

Meanwhile, the negative electrode current collector is not particularly limited as long as it does not cause chemical change in the battery and has a high conductivity. For example, copper, stainless steel, aluminum, nickel, titanium, baked carbon, or copper/stainless steel surfaces treated with carbon, nickel, titanium, silver or the like, and an aluminum-cadmium alloy, or the like may be used.

In addition, the negative electrode current collector may have conventionally a thickness of 3 to 500 µm, and like the positive electrode current collector, the adhesion strength of the negative electrode active material may be increased by forming fine unevenness on the surface of the positive current collector. For example, it may be used in various forms such as films, sheets, foils, nets, porous materials, foams, and non-woven fabrics.

Meanwhile, in the lithium secondary battery, a separator may be used without limitation as long as it has been used as a separator in a conventional secondary battery, and in particular, it is preferable to have low resistant with respect to the ion movement of the electrolyte and an excellent electrolyte hiding ability. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure of two or more layers thereof may be used. In addition, conventional porous non-woven fabrics, for example, non-woven fabrics made of high melting point glass fibers, polyethylene terephthalate fibers, etc., may be used. In addition, the separator may be a porous thin film having a pore diameter of 0.01 µm to 10 µm and a thickness of 5 µm to 300 µm.

Furthermore, the electrolyte may include an organic solvent and a lithium salt conventionally used for electrolytes, and is not particularly limited.

The organic solvent may be used without particular limitation as long as it can serve as a medium that enables the movement of ions involved in the electrochemical reaction of the battery.

Specifically, as the organic solvent, ester solvents such as methyl acetate, ethyl acetate, γ-butyrolactone, and ε-caprolactone; ether solvents such as dibutyl ether or tetrahydrofuran; ketone solvents such as cyclohexanone; aromatic hydrocarbon-based solvents such as benzene and fluorobenzene; carbonate-based solvents such as dimethylcarbonate (DMC), diethylcarbonate (DEC), methylethylcarbonate (MEC), ethylmethylcarbonate (EMC), ethylene carbonate (EC), propylene carbonate (PC), etc., may be used.

Among them, the carbonate-based solvents are preferred, and cyclic carbonates (e.g., ethylene carbonate, propylene carbonate, and etc.) having a high ion conductivity and a high permittivity that can increase the charge/discharge performance of batteries, and the mixtures of low-viscosity linear carbonate-based compounds (e.g., ethyl methyl carbonate, dimethyl carbonate, or diethyl carbonate) are more preferable.

As the lithium salt, any compound capable of providing lithium ions used in a lithium secondary battery may be used without particular limitation. Specifically, as the lithium salt, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂ or etc., may be used. The lithium salt is preferably included in the electrolyte in a concentration of about 0.6 mol% to 2 mol%.

In the electrolyte, in addition to the above electrolyte components, it may further include one or more additives such as, pyridine, triethylphosphite, triethanolamine, cyclic ether, ethylene diamine, n -glyme, hexaphosphoric acid triamide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol, or aluminum trichloride for the purpose of improving battery life characteristics, suppressing battery capacity decrease, and improving battery discharge capacity. The additive may be included in an amount of 0.1 to 5wt% with respect to the total weight of the electrolyte.

The lithium secondary battery of the present invention may be manufactured by interposing a separator between a positive electrode and a negative electrode to form an electrode assembly, and the electrode assembly can be formed by inserting it into a cylindrical battery case or a prismatic battery case, and then injecting an electrolyte. Alternatively, after stacking the electrode assemblies, it may be manufactured by impregnating with an electrolyte, and putting the resulting product into a battery case and sealing it.

When manufacturing the lithium secondary battery of the present invention, one or more organic solvents selected from the group consisting of N-methyl-2-pyrrolidone (NMP), acetone, ethanol, propylene carbonate, ethyl methyl carbonate, ethylene carbonate, and dimethyl carbonate, which are used in manufacturing a positive electrode, may be removed by drying the electrode assembly.

If an electrode having the same components as the organic solvent used in manufacturing the positive electrode is used as the electrolyte, the process of drying the electrode assembly may be omitted.

The battery case may be the one commonly used in the field, and there is no limitation to the external appearance according to the use of the battery, for example, it may be a cylindrical shape using a can, a prismatic shape, a pouch shape, or a coin shape, etc.

Since the lithium secondary battery of the present invention stably exhibits excellent discharge capacity, output characteristics, and capacity retention rate, it may be useful in portable devices such as mobile phones, laptops, and digital cameras, as well as in the field of electric vehicles such as hybrid electric vehicles (HEVs), j etc.

Hereinafter, embodiments of the present invention will be described in detail so that the people having ordinary skill in the art to which the present invention pertains can easily practice. However, the present invention may be implemented in many different forms, and is not limited to the embodiments described below.

### Examples

### Example 1

The positive electrode was manufactured by the following processes: forming a composition for preparing a positive electrode by mixing a LiFePO₄ positive electrode active material having an average particle diameter (D₅₀) of 2 µm, a carbon nanotube conductive material, a polyvinylidene fluoride (PVDF) binder, and a hydrogenated nitrile rubber (HNBR) dispersant in a N-methylpyrrolidone solvent at a weight ratio of 95.4:0.8 : 3.0: 0.8 (60wt% of solid content); applying to a 15 µm-thickness aluminum thin film uniformly so that the specific discharge capacity of the positive electrode becomes 2.9 mAh/cm²; and roll pressing to make the positive electrode active material layer 96 µm thickness. To lower the moisture content of the prepared positive electrode, a vacuum drying was conducted at 130 °C for 10 hours.

Next, a propylene carbonate (PC) solvent was sprayed by a spray nozzle in an amount of 0.1 mg/cm ² on the surface of the positive electrode active material layer of the prepared positive electrode to be uniformly applied. The positive electrode was aged for 15 minutes in a dry room environment at room temperature so that the entire amount of the organic solvent which is applied to the surface absorbed and impregnated into the electrode.

When the PC dispersed by the spray nozzle was all adsorbed into the positive electrode without volatilization, the adsorption amount for the total active material layer was 4,000 ppm.

### Example 2

A positive electrode was prepared in the same manner as in the example 1, except that acetone was used as the coating solvent.

### Example 3

The positive electrode was manufactured by the following process: forming a composition for preparing a positive electrode by mixing a LiFePO₄ positive electrode active material having an average particle diameter (D₅₀) of 2 µm, a carbon nanotube conductive material, a polyvinylidene fluoride (PVDF) binder, and a hydrogenated nitrile rubber (HNBR) dispersant in a N-methylpyrrolidone solvent at a weight ratio of 95.4:0.8:3.0:0.8 ratio (solid content 60% by weight), then, applying to a 15 µm thickness aluminum thin film uniformly so that the discharge specific capacity of the positive electrode becomes 2.9 mAh/cm², and roll pressing to make the positive electrode active material layer 96 µm thickness. To lower the moisture content of the prepared positive electrode, vacuum drying was conducted at 130 °C for 10 hours.

Next, the prepared positive electrode and N-methylpyrrolidone (NMP) solvent are placed in a petri dish in an airtight container, sealed, and stored for 1 day so that the NMP solvent volatilized in the airtight container is adsorbed into the positive electrode active material layer.

After preparing the positive electrode of Example 3 in a size of 50 mm × 50 mm and measuring the adsorption amount of the NMP solvent three times with Headspace Gas Chromatography with flame ionization detection (HS-GC-FID) equipment for three times, and the mean value with respect to the total positive electrode active material laye was 2,600 ppm r.

### Example 4

A positive electrode was prepared in the same manner as in Example 3, except that the prepared positive electrode and the Petri dish including the N-methylpyrrolidone (NMP) solvent were placed in an airtight container, sealed, and stored for 5 days.

After preparing the positive electrode of Example 4 in a size of 50 mm × 50 mm and measuring the adsorption amount of the NMP solvent three times with Headspace Gas Chromatography with flame ionization detection (HS-GC-FID) equipment for three times, and the mean value with respect to the total positive electrode active material layer was 8,600 ppm.

### Example 5.

A positive electrode was prepared in the same manner as in Example 1, except that a dimethyl carbonate was used as a coating solvent.

### Comparative Example 1

The positive electrode was manufactured by the following process: forming a composition for preparing a positive electrode by mixing a LiFePO4 positive electrode active material having an average particle diameter (D₅₀) of 2 µm, a carbon nanotube conductive material, a polyvinylidene fluoride (PVDF) binder, and a hydrogenated nitrile rubber (HNBR) dispersant in a N-methylpyrrolidone solvent at a weight ratio of 95.4:0.8:3.0:0.8 ratio (solid content 60% by weight), then, uniformly applying in a 15 µm thickness aluminum thin film so that the positive electrode active material layer is 96 µm thickness in the final produced positive electrode. To lower the moisture content of the prepared positive electrode, a vacuum drying was conducted at 130 ° C for 10 hours.

After preparing the positive electrode of Comparative Example 1 in a size of 50 mm × 50 mm and measuring the adsorption amount of the NMP solvent for three times with Headspace Gas Chromatography with flame ionization detection (HS-GC-FID) equipment for three times, and the mean value with respect to the whole positive electrode active material layer was 160 ppm.

### Comparative Example 2

A positive electrode was prepared in the same manner as in Comparative Example 1, except that distilled water was used as the coating solvent.

After preparing the positive electrode of Comparative Example 1 in a size of 50 mm × 50 mm and measuring the adsorption amount of the NMP solvent for three times with Karl fischer titration moisture measurement (Metrohm Co.) for three times, and the mean value with respect to the total positive electrode active material layer was 9500 ppm.

### [Experimental Example: Evaluation on adhesion strength]

The adhesion strength of the prepared positive electrode between the positive electrode active material layer and the positive electrode current collector was compared in Examples 1 to 5 and Comparative Examples 1 to 2.

Specifically, the prepared positive electrode in the Example 1 to 5 and Comparative example 1 to 2 was cut into the length 150 mm and the width 20 mm, and the surface of the electrode was attached to the slide glass of the length 75 mm and the width 25 mm in the longitudinal direction. In other words, the slide glass was attached to an area corresponding to half of the position in the longitudinal direction of the positive electrode. Then, the sample for evaluation was prepared by rubbing a roller with a load of 2 kg 10 times so that the double-sided tape was uniformly attached. The part of the sample where the slide glass attached was fixed to the sample stage of a Universal Testing Machine (UTM) (LF Plus LLOYD Co.), and the half part of the positive electrode where the slide glass was not attached was connected to the load cell of the UTM device.

While moving the load cell up to 50 mm at a speed of 100 mm/min, the load applied to the load cell was measured. At this time, the minimum value of the load measured in the interval between 20mm to 40mm of the whole driving course was measured as the electrode adhesion strength (gf /2 cm) of each sample. After a total of 5 times evaluations for each positive electrode, the mean values are shown in Table 1 below.

| | Applied solvent | Application amount of the solvent compared to the active material layer | The electrode adhesion strength (gf/2cm) |
|---|---|---|---|
| Example 1 | PC | 4000 ppm | 20 |
| Example 2 | acetone | 4000 ppm | 16 |
| Example 3 | NMP | 2600 ppm | 15 |
| Example 4 | NMP | 8600 ppm | 22 |
| Example 5 | dimethyl carbonate | 4000 ppm | 24 |
| Comparative Example 1 | - | 160 ppm NMP | 7 |
| Comparative Example 2 | H₂O | 9500 ppm | 6 |

The result of the experiment shows, the positive electrodes of the Example 1 to 5 have a significantly higher adhesion strength than the positive electrode of the Comparative Example 1 to 2. In the case of Comparative Example 1, unlike the present invention, the organic solvent was not absorbed into the positive electrode active material layer, thereby the electrode adhesion strength is inferior. Since the distilled water of Comparative Example 2 has a low inter-molecular attraction force with the PVDF binder, the effect of electrode adhesion strength is low.

## Claims

1. A manufacturing method of a positive electrode for a lithium secondary battery, comprising:
a step of preparing a positive electrode in which a positive electrode active material layer including a lithium iron phosphate is formed on a current collector; and
a step of adsorbing an organic solvent into the positive electrode active material layer, wherein the step of adsorbing the organic solvent into the positive electrode active material layer is a process consisting of
- directly spraying the organic solvent onto the positive electrode or
- sealing only the positive electrode with the organic solvent in an airtight container to absorb the organic solvent,
wherein the organic solvent comprises one or more selected from a group consisting of dimethylcarbonate (DMC), diethylcarbonate (DEC), methylethylcarbonate (MEC), ethylmethylcarbonate (EMC), ethylene carbonate (EC) and propylene carbonate (PC), and
wherein the organic solvent is adsorbed in a content of 2,000 to 20,000 ppm with respect to the total weight of the positive electrode active material layer, the content being a value obtained by calculating the average value after measuring the adsorption amount of the organic solvent three times using the Headspace Gas Chromatography with flame ionization detection equipment (HS-GC-FID).

2. The manufacturing method of a positive electrode for a lithium secondary battery of claim 1, wherein the organic solvent is sprayed by a spray nozzle, in an amount of 0.01 to 2 mg/cm², preferably 0.01 to 1 mg/cm², more preferably 0.05 to 0.5 mg/cm².

3. The manufacturing method of a positive electrode for a lithium secondary battery of claim 1, wherein the lithium iron phosphate is a compound represented by Formula 1 below:
[Formula 1] Li₁₊ₐFe₁₋ₓMₓ(PO_{4-b})X_{b}
Wherein, in the formula,
M comprises one or two or more elements selected from a group consisting of Al, Mg, Ni, Co, Mn, Ti, Ga, Cu, V, Nb, Zr, Ce, In, Zn and Y,
X comprises one or two or more elements selected from a group consisting of F, S, and N, and
a, b, and x is -0.5≤a≤0.5, 0≤b≤0.1, 0≤x≤0.5 respectively.

4. The manufacturing method of a positive electrode for a lithium secondary battery of claim 1, wherein the lithium iron phosphate is LiFePO₄ having an olivine crystal structure.

5. The manufacturing method of a positive electrode for a lithium secondary battery of claim 1, wherein an average particle diameter (D₅₀) of the lithium iron phosphate is 0.5 to 3 *µ*m, wherein D₅₀ is the particle diameter at the 50% point in the volume cumulative distribution according to the particle diameter, and is measured using a laser diffraction method.

6. The manufacturing method of a positive electrode for a lithium secondary battery of claim 1, wherein the positive electrode active material layer further comprises a binder.

7. The manufacturing method of a positive electrode for a lithium secondary battery of claim 6, wherein the binder comprises one or more selected from a group consisting of polyvinylidene fluoride (PVDF), styrene butadiene rubber (SBR) and carboxy methyl cellulose (CMC).

8. The manufacturing method of a positive electrode for a lithium secondary battery of claim 6, wherein the binder content with respect to the total weight of the positive electrode active material layer is 5% by weight or less.

9. A positive electrode for a lithium secondary battery, consisting of :
a positive electrode current collector; and
a positive electrode active material layer which comprises a lithium iron phosphate and is formed on at least one side of the positive electrode current collector;
wherein the positive electrode active material layer comprises an organic solvent at a content of 2,000 to 20,000 ppm with respect to the total weight of the positive electrode active material layer, the content being a value obtained by calculating the average value after measuring the adsorption amount of the organic solvent three times using the Headspace Gas Chromatography with flame ionization detection equipment (HS-GC-FID), and
wherein the organic solvent comprises one or more selected from a group consisting of dimethylcarbonate (DMC), diethylcarbonate (DEC), methylethylcarbonate (MEC), ethylmethylcarbonate (EMC), ethylene carbonate (EC) and propylene carbonate (PC).

10. The positive electrode for a lithium secondary battery of claim 9, wherein the electrode adhesion strength measured by a 90°peel test between the positive electrode active material layer and the positive electrode current collector is 4.9 N/m (10 gf/2 cm) or more, said peel test being performed as follows:
- the positive electrode was cut into the length 150 mm and the width 20 mm, and the surface of the electrode was attached to the slide glass of the length 75 mm and the width 25 mm in the longitudinal direction,
- then the sample for evaluation was prepared by rubbing a roller with a load of 2 kg 10 times so that the double-sided tape was uniformly attached,
- while moving the load cell up to 50 mm at a speed of 100 mm/min, the minimum value of the load measured in the interval between 20mm to 40mm of the whole driving course corresponds to the electrode adhesion strength in N/m (gf /2 cm).

11. The positive electrode for a lithium secondary battery of claim 9, wherein the positive electrode active layer is in direct contact with the positive electrode current collector.

12. The positive electrode for a lithium secondary battery of claim 9, wherein an average particle diameter of the lithium iron phosphate (D₅₀) is 0.5 to 3 *µ*m, wherein D₅₀ is the particle diameter at the 50% point in the volume cumulative distribution according to the particle diameter, and is measured using a laser diffraction method.

13. A lithium secondary battery comprises the positive electrode of claim 9.

## Patentansprüche

1. Herstellungsverfahren für eine positive Elektrode für eine Lithium-Sekundärbatterie, umfassend:
einen Schritt des Herstellens einer positiven Elektrode, bei dem eine Aktivmaterialschicht der positiven Elektrode, die ein Lithiumeisenphosphat enthält, auf einem Stromkollektor ausgebildet wird; und
einen Schritt des Adsorbierens eines organischen Lösungsmittels in die Aktivmaterialschicht der positiven Elektrode,
wobei der Schritt des Adsorbierens des organischen Lösungsmittels in die Aktivmaterialschicht der positiven Elektrode ein Verfahren ist, das daraus besteht
• das organische Lösungsmittel direkt auf die positive Elektrode zu sprühen oder
• nur die positive Elektrode mit dem organischen Lösungsmittel in einem luftdichten Behälter zu versiegeln, um das organische Lösungsmittel zu absorbieren,
wobei das organische Lösungsmittel eines oder mehrere umfasst, ausgewählt aus einer Gruppe bestehend aus Dimethylcarbonat (DMC), Diethylcarbonat (DEC), Methylethylcarbonat (MEC), Ethylmethylcarbonat (EMC), Ethylencarbonat (EC) und Propylencarbonat (PC), und
wobei das organische Lösungsmittel in einem Gehalt von 2.000 bis 20.000 ppm in Bezug auf das Gesamtgewicht der Aktivmaterialschicht der positiven Elektrode adsorbiert wird, wobei der Gehalt ein Wert ist, der durch Berechnung des Durchschnittswerts nach dreimaliger Messung der Adsorptionsmenge des organischen Lösungsmittels unter Verwendung eines Headspace-Gaschromatographie-Geräts mit Flammenionisationsdetektion (HS-GC-FID) erhalten wird.

2. Herstellungsverfahren für eine positive Elektrode für eine Lithium-Sekundärbatterie nach Anspruch 1, wobei das organische Lösungsmittel durch eine Sprühdüse in einer Menge von 0,01 bis 2 mg/cm², vorzugsweise 0,01 bis 1 mg/cm², noch bevorzugter 0,05 bis 0,5 mg/cm² aufgesprüht wird.

3. Herstellungsverfahren für eine positive Elektrode für eine Lithium-Sekundärbatterie nach Anspruch 1, wobei das Lithiumeisenphosphat eine durch die nachstehende Formel 1 dargestellte Verbindung ist:
[Formel 1] Li_{1+*a*}Fe₁₋*ₓMₓ*(PO_{4-*b*})*X_{b}*
Wobei in der Formel,
M ein oder zwei oder mehr Elemente umfasst, die aus einer Gruppe bestehend aus Al, Mg, Ni, Co, Mn, Ti, Ga, Cu, V, Nb, Zr, Ce, In, Zn und Y ausgewählt sind,
X ein oder zwei oder mehr Elemente umfasst, die aus einer Gruppe bestehend aus F, S und N ausgewählt sind,
und
a, b und x jeweils -0,5≤a≤0,5, 0<b≤0,1, 0≤x≤0,5 sind.

4. Herstellungsverfahren für eine positive Elektrode für eine Lithium-Sekundärbatterie nach Anspruch 1, wobei das Lithiumeisenphosphat LiFePO₄ mit einer Olivin-Kristallstruktur ist.

5. Herstellungsverfahren für eine positive Elektrode für eine Lithium-Sekundärbatterie nach Anspruch 1, wobei ein mittlerer Partikeldurchmesser (D₅₀) des Lithiumeisenphosphats 0,5 bis 3 µm beträgt, wobei D₅₀ der Partikeldurchmesser am 50-%-Punkt in der kumulativen Volumenverteilung gemäß dem Partikeldurchmesser ist und unter Verwendung einer Laserbeugungsmethode gemessen wird.

6. Herstellungsverfahren für eine positive Elektrode für eine Lithium-Sekundärbatterie nach Anspruch 1, wobei die Aktivmaterialschicht der positiven Elektrode ferner ein Bindemittel umfasst.

7. Herstellungsverfahren für eine positive Elektrode für eine Lithium-Sekundärbatterie nach Anspruch 6, wobei das Bindemittel eines oder mehrere umfasst, ausgewählt aus einer Gruppe bestehend aus Polyvinylidenfluorid (PVDF), Styrol-Butadien-Kautschuk (SBR) und Carboxymethylcellulose (CMC).

8. Herstellungsverfahren für eine positive Elektrode für eine Lithium-Sekundärbatterie nach Anspruch 6, wobei der Bindemittelgehalt in Bezug auf das Gesamtgewicht der Aktivmaterialschicht der positiven Elektrode 5 Gew.-% oder weniger beträgt.

9. Positive Elektrode für eine Lithium-Sekundärbatterie, bestehend aus:
einem Stromkollektor der positiven Elektrode; und
einer Aktivmaterialschicht der positiven Elektrode, die ein Lithiumeisenphosphat umfasst und auf mindestens einer Seite des Stromkollektors der positiven Elektrode ausgebildet ist;
wobei die Aktivmaterialschicht der positiven Elektrode ein organisches Lösungsmittel in einem Gehalt von 2.000 bis 20.000 ppm in Bezug auf das Gesamtgewicht der Aktivmaterialschicht der positiven Elektrode umfasst, wobei der Gehalt ein Wert ist, der durch Berechnung des Durchschnittswerts nach dreimaliger Messung der Adsorptionsmenge des organischen Lösungsmittels unter Verwendung eines Headspace-Gaschromatographie-Geräts mit Flammenionisationsdetektion (HS-GC-FID) erhalten wird, und
wobei das organische Lösungsmittel eines oder mehrere umfasst, ausgewählt aus einer Gruppe bestehend aus Dimethylcarbonat (DMC), Diethylcarbonat (DEC), Methylethylcarbonat (MEC), Ethylmethylcarbonat (EMC), Ethylencarbonat (EC) und Propylencarbonat (PC).

10. Positive Elektrode für eine Lithium-Sekundärbatterie nach Anspruch 9, wobei die durch einen 90°-Schältest zwischen der Aktivmaterialschicht der positiven Elektrode und dem Stromkollektor der positiven Elektrode gemessene Elektrodenhaftfestigkeit 4,9 N/m (10 gf/2cm) oder mehr beträgt, wobei der Schältest wie folgt durchgeführt wird:
• die positive Elektrode wurde auf die Länge von 150 mm und die Breite von 20 mm zugeschnitten, und die Oberfläche der Elektrode wurde an dem Objektträger mit der Länge von 75 mm und der Breite von 25 mm in Längsrichtung befestigt,
• dann wurde die Probe zur Bewertung durch 10-maliges Reiben mit einer Walze mit einer Last von 2 kg vorbereitet, so dass das doppelseitige Klebeband gleichmäßig befestigt wurde,
• während die Wägezelle mit einer Geschwindigkeit von 100 mm/min bis zu 50 mm bewegt wird, entspricht der Minimalwert der im Intervall zwischen 20 mm und 40 mm des gesamten Fahrwegs gemessenen Last der Elektrodenhaftfestigkeit in N/m (gf/2 cm).

11. Positive Elektrode für eine Lithium-Sekundärbatterie nach Anspruch 9, wobei die Aktivschicht der positiven Elektrode in direktem Kontakt mit dem Stromkollektor der positiven Elektrode steht.

12. Positive Elektrode für eine Lithium-Sekundärbatterie nach Anspruch 9, wobei ein mittlerer Partikeldurchmesser des Lithiumeisenphosphats (D₅₀) 0,5 bis 3 µm beträgt, wobei D₅₀ der Partikeldurchmesser am 50-%-Punkt in der kumulativen Volumenverteilung gemäß dem Partikeldurchmesser ist und unter Verwendung einer Laserbeugungsmethode gemessen wird.

13. Eine Lithium-Sekundärbatterie, umfassend die positive Elektrode nach Anspruch 9.

## Revendications

1. Procédé de fabrication d'une électrode positive pour une batterie secondaire au lithium, comprenant :
une étape de préparation d'une électrode positive dans laquelle une couche de matériau actif d'électrode positive incluant un phosphate de fer et de lithium est formée sur un collecteur de courant ; et
une étape d'adsorption d'un solvant organique dans la couche de matériau actif d'électrode positive,
dans lequel l'étape d'adsorption du solvant organique dans la couche de matériau actif d'électrode positive est un processus consistant à
• pulvériser directement le solvant organique sur l'électrode positive ou
• sceller uniquement l'électrode positive avec le solvant organique dans un récipient étanche à l'air pour absorber le solvant organique,
dans lequel le solvant organique comprend un ou plusieurs éléments choisis dans un groupe constitué du carbonate de diméthyle (DMC), du carbonate de diéthyle (DEC), du carbonate de méthyléthyle (MEC), du carbonate d'éthylméthyle (EMC), du carbonate d'éthylène (EC) et du carbonate de propylène (PC), et
dans lequel le solvant organique est adsorbé en une teneur de 2 000 à 20 000 ppm par rapport au poids total de la couche de matériau actif d'électrode positive, la teneur étant une valeur obtenue en calculant la valeur moyenne après avoir mesuré trois fois la quantité d'adsorption du solvant organique à l'aide d'un équipement de chromatographie en phase gazeuse en espace de tête avec détection à ionisation de flamme (HS-GC-FID).

2. Procédé de fabrication d'une électrode positive pour une batterie secondaire au lithium selon la revendication 1, dans lequel le solvant organique est pulvérisé par une buse de pulvérisation, en une quantité de 0,01 à 2 mg/cm², de préférence de 0,01 à 1 mg/cm², plus préférablement de 0,05 à 0,5 mg/cm².

3. Procédé de fabrication d'une électrode positive pour une batterie secondaire au lithium selon la revendication 1, dans lequel le phosphate de fer et de lithium est un composé représenté par la Formule 1 ci-dessous :
[Formule 1] Li_{1+*a*}Fe_{1-*x*}M*ₓ*(PO_{4-*b*})*X_{b}*
Dans laquelle, dans la formule,
M comprend un ou deux éléments ou plus choisis dans un groupe constitué de Al, Mg, Ni, Co, Mn, Ti, Ga, Cu, V, Nb, Zr, Ce, In, Zn et Y,
X comprend un ou deux éléments ou plus choisis dans un groupe constitué de F, S et N,
et
a, b, et x sont respectivement -0,5≤a≤0,5, 0<b≤0,1, 0≤x≤0,5.

4. Procédé de fabrication d'une électrode positive pour une batterie secondaire au lithium selon la revendication 1, dans lequel le phosphate de fer et de lithium est du LiFePO₄ ayant une structure cristalline d'olivine.

5. Procédé de fabrication d'une électrode positive pour une batterie secondaire au lithium selon la revendication 1, dans lequel un diamètre de particule moyen (D₅₀) du phosphate de fer et de lithium est de 0,5 à 3 µm, dans lequel D₅₀ est le diamètre de particule au point de 50 % dans la distribution cumulative en volume en fonction du diamètre de particule, et est mesuré au moyen d'une méthode de diffraction laser.

6. Procédé de fabrication d'une électrode positive pour une batterie secondaire au lithium selon la revendication 1, dans lequel la couche de matériau actif d'électrode positive comprend en outre un liant.

7. Procédé de fabrication d'une électrode positive pour une batterie secondaire au lithium selon la revendication 6, dans lequel le liant comprend un ou plusieurs éléments choisis dans un groupe constitué du poly(fluorure de vinylidène) (PVDF), du caoutchouc styrène-butadiène (SBR) et de la carboxyméthylcellulose (CMC).

8. Procédé de fabrication d'une électrode positive pour une batterie secondaire au lithium selon la revendication 6, dans lequel la teneur en liant par rapport au poids total de la couche de matériau actif d'électrode positive est de 5 % en poids ou moins.

9. Électrode positive pour une batterie secondaire au lithium, consistant en :
un collecteur de courant d'électrode positive ; et
une couche de matériau actif d'électrode positive qui comprend un phosphate de fer et de lithium et est formée sur au moins un côté du collecteur de courant d'électrode positive ;
dans laquelle la couche de matériau actif d'électrode positive comprend un solvant organique à une teneur de 2 000 à 20 000 ppm par rapport au poids total de la couche de matériau actif d'électrode positive, la teneur étant une valeur obtenue en calculant la valeur moyenne après avoir mesuré trois fois la quantité d'adsorption du solvant organique à l'aide d'un équipement de chromatographie en phase gazeuse en espace de tête avec détection à ionisation de flamme (HS-GC-FID), et
dans laquelle le solvant organique comprend un ou plusieurs éléments choisis dans un groupe constitué du carbonate de diméthyle (DMC), du carbonate de diéthyle (DEC), du carbonate de méthyléthyle (MEC), du carbonate d'éthylméthyle (EMC), du carbonate d'éthylène (EC) et du carbonate de propylène (PC).

10. Électrode positive pour une batterie secondaire au lithium selon la revendication 9, dans laquelle la force d'adhérence de l'électrode mesurée par un essai de pelage à 90° entre la couche de matériau actif d'électrode positive et le collecteur de courant d'électrode positive est de 4,9 N/m (10 gf/2cm) ou plus, ledit essai de pelage étant réalisé comme suit :
• l'électrode positive a été coupée à la longueur de 150 mm et à la largeur de 20 mm, et la surface de l'électrode a été fixée à la lame de verre de longueur 75 mm et de largeur 25 mm dans la direction longitudinale,
• puis l'échantillon pour évaluation a été préparé en frottant un rouleau avec une charge de 2 kg 10 fois de sorte que le ruban adhésif double face a été uniformément fixé,
• tout en déplaçant la cellule de charge jusqu'à 50 mm à une vitesse de 100 mm/min, la valeur minimale de la charge mesurée dans l'intervalle entre 20 mm et 40 mm de l'ensemble du parcours d'entraînement correspond à la force d'adhérence de l'électrode en N/m (gf/2 cm).

11. Électrode positive pour une batterie secondaire au lithium selon la revendication 9, dans laquelle la couche active d'électrode positive est en contact direct avec le collecteur de courant d'électrode positive.

12. Électrode positive pour une batterie secondaire au lithium selon la revendication 9, dans laquelle un diamètre de particule moyen du phosphate de fer et de lithium (D₅₀) est de 0,5 à 3 µm, dans laquelle D₅₀ est le diamètre de particule au point de 50 % dans la distribution cumulative en volume en fonction du diamètre de particule, et est mesuré au moyen d'une méthode de diffraction laser.

13. Une batterie secondaire au lithium comprend l'électrode positive de la revendication 9.
